# FASCICULE DE BREVET EUROPEEN

(11) **EP 0 437 594 B1**
(45) Date de publication et mention de la délivrance du brevet: **27.07.1994**
(21) Numéro de dépôt: 90912871.2
(22) Date de dépôt: 07.08.1990
(51) Int. Cl.: B01J 31/18, B01J 31/06

(54) **CATALYSEURS D'OXYDATION A BASE DE METALLOPORPHYRINE SUR SUPPORT**
OXIDATIONSKATALYSATOR AUF BASIS EINES METALLPORPHYRINS AUF EINEM TRÄGER
OXIDATION CATALYSTS BASED ON METALLOPORPHYRINE ON A SUBSTRATE

(30) Priorité: 10.08.1989 FR 8910761
(43) Date de publication de la demande: 24.07.1991
(73) Titulaire: ELF AQUITAINE, 92400 Courbevoie (FR); ELF ATOCHEM S.A., 92800 Puteaux (FR)
(72) Inventeur: MEUNIER, Bernard, F-31320 Castanet (FR); LABAT, Gilles, F-31400 Toulouse (FR); SERIS, Jean-Louis Lotissement Parenche No 15, F-64110 Jurançon (FR)
(74) Mandataire: Ohresser, François
(86) Numéro de dépôt international: FR9000601
(87) Numéro de publication internationale: WO9101806

(56) Documents cités:
- EP-A- 0 118 801
- EP-A- 0 193 974
- US-A- 4 800 188
- Journal of Organic Chemistry, vol. 44, no. 3, 1979, American Chemical Society, R.B. King et al., pages 385-391

## Description

La présente invention a pour objet de nouveaux catalyseurs d'oxydation constitués de métalloporphyrines synthétiques immobilisées sur des supports insolubles.

L'utilisation des métalloporphyrines synthétiques comme catalyseurs des réactions d'oxydation en phase liquide a fait l'objet, depuis quelques années, de nombreux travaux par exemple ceux illustrés par Mc. Murry, J.T. Groves, dans "Cytochrome P. 450 : Structure, Mechanism and Biochemistry" Plenum, New York, 1986, pp 1-28.

Ces travaux ont mis en évidence le rôle important joué par le ligand proximal dans le contrôle de la vitesse, de la chimiosélectivité et de la stéréochimie de la réaction d'oxydation (cf. B. Meunier et al J. Am. Chem. Soc. 106, 6668-6676 ; 1984). Ceci a amené les chercheurs, pour modifier la réactivité des systèmes catalytiques utilisés constitués par des métalloporphyrines et un agent oxydant tel que H₂O₂ ou peroxydes, à ajouter au milieu réactionnel une base azotée telle que la pyridine ou l'imidazole (brevet français 2318545) qui joue le rôle de ligand axial. Toutefois la limite de cette méthode est liée au fait que la base azotée est présente en excès dans un milieu réactionnel très oxydant ce qui conduit à une oxydation du co-catalyseur et donc à une consommation importante de la base azotée.

Par ailleurs ces procédés d'oxydation sont conduits en catalyse homogène ce qui entraîne des difficultés pour séparer ensuite le produit de la réaction du milieu réactionnel mais également des problèmes pour récupérer le catalyseur et son co-catalyseur en vue d'une réutilisation.

Pour pallier cet inconvénient il a été proposé par la demanderesse, dans une demande de brevet français pendante FR-A-2633925, de travailler en catalyse hétérogène avec un catalyseur métalloporphyrine sulfoné fixé sur un support de type résine échangeuse d'ions (Amberlite R). Cette solution, avantageuse sur le plan industriel, n'évite cependant pas la nécessité d'ajouter la base azotée au milieu réactionnel.

La présente invention a pour but des catalyseurs d'oxydation permettant de travailler en catalyse hétérogène et qui, comportant le ligand axial nécessaire à la réaction, évite l'addition de la base azotée et donc sa consommation au cours du processus réactionnel.

La présente invention a pour objet de nouveaux catalyseurs d'oxydation en phase liquide de composés organiques fonctionnels, constitués par des métalloporphyrines, portant comme substituants des groupes anioniques, actives en présence d'un agent oxydant, caractérisés en ce que les métalloporphyrines sont immobilisées sur un support, insoluble dans la phase liquide, de type polymère comportant des groupements azotés servant de base de Lewis, d'une part par liaison covalente entre le métal de la porphyrine et l'atome d'azote du groupement azoté du support et d'autre part par liaison électrostatique entre les groupements anioniques de la métalloporphyrine et les sites azotés chargés positivement du polymère.

Les métalloporphyrines entrant dans la composition des catalyseurs de l'invention sont toutes les porphyrines possédant un site axial libre, ou occupé par un ligand axial pouvant être aisément déplacé par le coordinat potentiel, c'est-a-dire l'azote du groupement azoté provenant du support utilisé et des groupements négativement chargés (ou conduisant de tels groupements après ionisation) qui sont désignés dans ce texte par l'expression groupes anioniques, à la périphérie du ligand porphyrinique.

Ces groupes anioniques les plus usuels pour les composés porphyriniques sont les fonctions acide carboxylique ou sulfonates.

Les métalloporphyrines utilisées pour les catalyseurs de l'invention pourront être les complexes métalliques des porphyrines de la famille des porphyrines naturelles ne comportant pas de substituants en position méso mais au moins un groupe anionique sur les positions pyrroliques. A titre d'exemples, on peut citer la deutéroporphyrine IX, la mésoporphyrine-IX, la protoporphyrine-IX, les uroporphyrines I et III ...

Les métalloporphyrines préférées sont des porphyrines substituées en méso par des radicaux aromatiques. Les radicaux aryles porteront eux mêmes des substituants tels que des groupes alkyle, aryle ou des halogènes, chlore par exemple, en ortho, ortho' (positions 2, 6) et au moins une fonction sulfonato ou une fonction acide carboxylique.

Les porphyrines sont métallées en fonction du type de réaction mise en oeuvre. Le métal sera choisi parmi par exemple : chrome, manganèse, fer, cobalt, nickel, platine, iridium. Le fer et le manganèse sont particulièrement bien adaptés à de multiples réactions d'oxydation.

A titre d'exemple de métalloporphyrines bien adaptées aux catalyseurs de l'invention on peut citer :
Mn - TMPS et Fe-TMPS ; TMPS désignant la 5, 10, 15, 20 tétrakis (3,5 - disulfonatomésityl) porphyrine. Ces porphyrines sont décrites dans une demande de brevet français pendante de la demanderesse. On peut citer également :
Mn-TDCPS et Fe-TDCPS c'est-à-dire les dérivés manganèse et fer de la 5, 10, 15, 20-tétrakis (3-sulfonato - 2,6-dichlorophényl) porphyrine et les dérivés métalliques de la méso-tétra (para-carboxyphényl) porphyrine.

Le support sur lequel sera immobilisée la métalloporphyrine sera un polymère ou un copolymère porteur de groupements azotés servant de base de Lewis. Ces groupements azotés résulteront soit de la co-polymérisation d'un monomère porteur de ces groupements, soit du greffage de ces groupements sur un polymère. Ces groupements azotés seront de préférence du type pyridine, histidine ou imidazole.

On peut citer à titre d'exemples de tels polymères, les copolymères polyvinylpyridine/divinyl benzène (2, 3 ou 4 vinyl pyridine/divinyl benzène), les copolymères polyvinylimidazole/divinylbenzène, les copolymères polyphénylquinoxaline/divinylbenzène, les copolymères poly (N-vinylcarbazole)/divinylbenzène, les copolymères polyvinylpyridine/styrène, les polyhistidines réticulés ou les copolymères d'acides aminés riches en histidine.

L'immobilisation de la métalloporphyrine sur le support se réalisera par fixation des groupements azotés sur le métal de la métalloporphyrine par des liaisons covalentes selon un processus connu.

Le procédé de fixation par liaison covalente consistera à traiter les polymères comportant les groupements azotés servant de base de Lewis par un acide conduisant à une résine cationique par protonation des sites azotés, à traiter ladite résine par une base permettant la déprotonation de ces sites azotés, à mettre en contact la résine avec la métalloporphyrine anionique le temps suffisant à une fixation de type covalent puis, enfin, à reprotoner au moyen d'un acide les groupements azotés non impliqués dans la fixation covalente.

La reprotonation permet la création de liaisons entre les groupes anioniques de la porphyrine et les cations azotés de type ammonium du polymère. Ceci permet de réaliser une double fixation -l'une de type liaison covalente et l'autre par interaction électrostatique- de la porphyrine sur les sites du polymère conférant au catalyseur final une grande stabilité.

Ces catalyseurs sont utilisables :
- dans des processus d'oxydation : oxydation d'alcools, d'aldéhydes, décarboxylation (décarboxylation de l'acide phénylacétique en acide benzoîque), oxydation d'amines aliphatiques et aromatiques, oxydation de sulfides et de thiols et rupture oxydative de liaisons C-C, C-N et C-O,
- dans des processus d'halogénations : chloration, bromation de composés aliphatiques et aromatiques (chloration de β-dicétones : chloration de la dimèdone en chlorodimèdone).

Ces réactions sont réalisées en milieu organique (dichlorométhane, acétonitrile,...) ou en milieu essentiellement aqueux (mélange acétonitrile/eau tamponnée) en présence de tous oxydants convenables : peracides et peroxydes, organiques et minéraux, solubles dans l'eau : H₂O₂, hypochlorite de sodium, KHSO₅, sel de magnésium de l'acide peroxyphtalique, ou solubles en milieu organique : 4-tert-butylhydroperoxyde, cumènehydroperoxyde,...

Les catalyseurs de l'invention sont illustrés par les exemples ci-après visant la préparation des dits catalyseurs et leur utilisation pour l'oxydation d'alcools benzyliques : l'alcool vératrylique (I) et un dimère le 1- (3, 4-diméthoxyphényl) -2- (2-méthoxyphénoxy) propane -1,3 - diol (II).

### Exemple 1 :

On prépare tout d'abord les métalloporphyrines Mn-TMPS, Fe-TMPS, Mn-TDCPPS, Fe-TDCPPS selon des procédés déjà décrits.

Pour les Mn-TMPS et Fe-TMPS le procédé, consiste à préparer la TMP suivant la méthode décrite par M Kihn-Botulinski et B. Meunier (Inorg. Chem. 27, 209- 210 ; 1988, à effectuer une sulfonation à chaud au moyen d'oléum puis enfin à métaller au moyen de sels de manganèse ou de fer la TMPS issue de l'étape précédente.

Pour Mn-TDCPPS et Fe-TDCPPS on prépare tout d'abord TDCPP selon la méthode décrite par J.S. LINDSEY et coll. J. org. chem. 1989, 54, 828, on sulfone TDCPP selon la même méthode que précédemment pour obtenir TDCPPS qui est enfin métallée de façon similaire à celle de TMPS.

Fixation de la Mn-TMPS et Fe-TMPS sur le support poly-(4-vinylpyridinium-4-toluènesulfonate) réticulé à l'aide de 2 % de divinylbenzène : produit Fluka,3,5 mmoles de 4-toluènesulfonate par gramme de résine, 100 - 200 mesh.

Dans une première étape, on active le polymère en libérant la forme base des pyridines par un lavage avec une solution de NaOH (2M) 2 à 3 fois. Le polymère est ensuite lavé successivement à l'aide de méthanol, d'acétone et d'éther éthylique. Le polymère est alors séché sous vide.

Dans une deuxième étape, on fixe les complexes Mn-TMPS et Fe-TMPS sur le polymère activé en additionnant 1g de polymère à une solution 0.2 M de porphyrines métallées (32 mg de complexe dans 100 ml de MeOH). La fixation se réalise en 30 min-60 min, en agitation lente jusqu'à éclaircissement optimal de la solution. Le polymère est alors lavé au mélange MeOH/H₂O (50/50, v/v) puis avec une solution d'acide acétique à 2 % (pH 4.0) 2 à 3 fois (afin de re-protoner les pyridines n'ayant pas été impliquées dans la fixation covalente au métal). On lave ensuite à l'aide de méthanol, d'acétone et d'éther éthylique puis on sèche le polymère sous vide (2 µmol de complexes Mn-TMPS ou Fe-TMPS sont fixées sur 100 mg de support).

De la même manière, on fixe les catalyseurs Mn-TDCPPS, Fe-TDCPS, c'est-à-dire les dérivés manganèse et fer de la 5, 10, 15, 20-tétrakis (3-sulfonato-2,6-dichlorophényl) porphyrine tétrasodique (TDCPPS).

Il est possible de doubler la quantité de complexes à fixer, 3,2 mg de complexes sur 50 mg de polymère. (2 µmoles de complexes correspondent à 50 mg de polymère).

### Exemples 2 à 12 :

### Conditions générales :

Les différents catalyseurs Mn-TMPS, Fe-TMPS, Mn-TDCPPS et Fe-TDCPPS immobilisés sur la résine échangeuse ont été utilisés pour oxyder les substrats I et II en utilisant KHSO₅ comme agent oxydant. Le catalyseur immobilisé sur résine est ajouté à la solution de substrat solution acétonitrile-tampon pH : 3 pour le fer, et tampon pH6 pour le manganèse. La réaction est déclenchée par l'addition de la solution oxydante (Oxone R : 2KHSO₅, KHSO₄, K₂SO₄).

### Conditions particulières :

### Exemple 2 :

Substrat I (20 µmol, 3,36 mg) 500 µl d'une solution d'acétonitrile à 40 mM en alcool vératrylique Fe-TMPS supportée (2 µmol sur 100 mg de support) tampon citrate-phosphate 0,1 M (1ml) : pH : 3,0 KHSO₅ (100 µmol : 30,7 mg dissous dans 500 µl de tampon pH 3,0.

### Exemple 3 :

Mêmes conditions opératoires que pour l'exemple 2, en remplaçant Fe-TMPS supportée par Mn-TMPS supportée et en utilisant un tampon phosphate pH: 6,0.

### Exemple 4 :

Mêmes conditions opératoires que pour l'exemple 3 en remplaçant Mn-TMPS supportée par Mn-TDCPPS supportée.

### Exemple 5 :

Mêmes conditions opératoires que pour l'exemple 2 : remplacement du subtrat I par le substrat II.

### Exemple 6 :

Mêmes conditions opératoires que pour l'exemple 3 : remplacement du substrat I par le substrat II et remplacement de Mn-TMPS supportée par Mn-TPPS supportée (méso-tétra (4-sulfonatophényl)porphyrine).

### Exemple 7 :

Mêmes conditions opératoires que pour l'exemple 3 : remplacement du substrat I par le substrat II.

### Exemple 8 :

Mêmes conditions opératoires que pour l'exemple 3 : remplacement du substrat I par le substrat II et modification du pH : 3,0.

### Exemple 9 :

Mêmes conditions opératoires que pour l'exemple 4 : remplacement du substrat I par le substrat II.

### Exemple 10 :

Mêmes conditions opératoires que pour l'exemple 3 en remplacant KHSO₅ par MMPP (sel de magnésium de l'acide monopéroxyphtalique).

### Exemple 11 :

Mêmes conditions opératoires que pour l'exemple 3 en réutilisant le catalyseur de cet exemple 3 après lavage et séchage.

### Exemple 12 :

Mêmes conditions opératoires que pour l'exemple 7 en réutilisant le même catalyseur après lavage et séchage. Les résultats obtenus sont résumés dans le tableau I.

**Tableau I**

| Ex | Catalyseur | pH | % conversion après | |
|---|---|---|---|---|
| | | | 1 min | 15 min |
| 2 | Fe-TMPS | 3 | 7 | 15 |
| 3 | Mn-TMPS | 6 | 74 | 93 |
| 4 | Mn-TDCPPS | 6 | 90 | 91 |
| 5 | Fe-TMPS | 3 | 8 | 15 |
| 6 | Mn-TPPS | 6 | 60 | 69 |
| 7 | Mn-TMPS | 6 | 61 | 74 |
| 8 | Mn-TMPS | 3 | 63 | 74 |
| 9 | Mn-TDCPPS | 6 | 68 | 76 |
| 10 | Mn-TMPS | 6 | 57 | 82 |
| 11 | Mn-TMPS | 6 | 59 | 84 |
| 12 | Mn-TMPS | 6 | 67 | 67 |

### Exemples 13 à 15 :

Ces exemples illustrent l'utilisation des catalyseurs de l'invention dans un processus d'halogénation de composés organiques fonctionnels.

La réaction réalisée est la chloration en position 4 de la dimédone (1,1-diméthyl-cyclohexane-3,5 dione).

Les réactifs utilisés sont les suivants : Dimédone (20 µmol) ; 500 µl d'une solution d'acétonitrile à 40 mM en dimédone ; Mn-TMPS supportée (2 µmol sur 100 mg de support) ; tampon citrate-phosphate 0,1 M (1 ml) pH : 3,0 ; 125 mg de NaCl (200 µmol) agent de chloration ; H₂O₂ (100 µmol) : 12 µl d'une solution H₂O₂ à 8,6 M (ex. 13).

Pour l'exemple 14, on remplace Mn-TMPS par Fe-TMPS supporté.

Dans l'exemple 15, on met en oeuvre les réactifs de l'exemple 13 en réutilisant pour la 3ème fois le catalyseur après lavage et séchage.

Les conditions opératoires sont les mêmes que celles de l'exemple 2.

Les résultats obtenus sont résumés dans le tableau 2 ci-dessous.

**TABLEAU 2**

| Exemples | Catalyseurs | % formation de chlorodimédone après | | |
|---|---|---|---|---|
| | | 30 mn | 45 mn | 60 mn |
| 13 | Mn-TMPS | 8 | 12 | 13 |
| 14 | Fe-TMPS | 2 | - | 5 |
| 15 | Mn-TMPS | 6 | 11 | 12 |

Il faut observer qu'au bout d'une heure de réaction, on observe un rendement de conversion de 80 % de la dimédone et qu'à côté de la chlorodimédone se forme une hydroxydimédone. Cependant, le produit chloré est intéressant car particulièrement difficile à synthétiser de manière conventionnelle. En outré, on constate que le catalyseur conserve pratiquement toute son activité après 3 utilisations.

### Exemples 16 et 17 :

Ces exemples illustrent l'utilisation de supports polymériques comportant des groupements azotés autres que la pyridine convenant aux catalyseurs de l'invention.

Il s'agit du :
- poly-N-vinylimidazole (ou en abréviation PVIm),
- polyhistidine (ou en abréviation PH).

Le poly-N-vinylimidazole utilisé a été préparé par polymérisation radicalaire du N-vinylimidazole dans le méthanol en utilisant l' , '-azobisisobutironitrile comme initiateur. Le polymère résultant est soluble dans le méthanol et l'eau. Il peut être précipité par addition d'acétone.

Le poly-L-histidine est un produit commercial (Sigma).

On utilise comme élément actif la métalloporphyrine sulfonée Mn-TMPS dont la fixation sur ces deux supports a été faite dans les conditions décrites pour le polyvinylpyridine dans l'exemple 1. Le complexe supporté sur poly-N-vinylimidazole, Mn-TMPS/PVIm, est soluble dans le mélange acétonitrile-eau tamponnée utilisé pour les oxydations catalytiques décrites dans la présente demande. Par contre, le catalyseur supporté sur polyhistidine, Mn-TMPS/pH, est insoluble dans le même milieu. L'alcool vératrylique a été choisi pour comparer l'activité catalytique de ces complexes supportes à celle du même complexe sur polyvinylpyridine. Les conditions expérimentales sont celles utilisées dans l'exemple 3 et les résultats sont rassemblés dans le tableau 3, ci-dessous.

**TABLEAU 3**

| Ex. | Catalyseur | pH | % conversion après 15 mn |
|---|---|---|---|
| 3 | Mn-TMPS/PVP | 6 | 93 (pour mémoire) |
| 16 | Mn-TMPS/PVIm | 6 | 35 |
| 17 | Mn-TMPS/PH | 6 | 49 |

Il est à noter que le polymère supporté sur polyhistidine, Mn-TMPS/PH, résiste bien comme le complexe supporté sur polyvinylpyridine, Mn-TMPS/PVP, aux conditions oxydantes de la réaction catalytique.

## Revendications

1. Catalyseurs d'oxydation en phase liquide de composés organiques fonctionnels constitués par des métalloporphyrines portant comme substituants des groupes anioniques, actives en présence d'un agent oxydant caractérisés en ce que les métalloporphyrines sont immobilisées sur un support, insoluble dans la phase liquide, de type polymère comportant des groupements azotés servant de base de Lewis, d'une part par liaison covalente entre le métal de la porphyrine et l'atome d'azote du groupement azoté du support et d'autre part par liaison électrostatique entre les groupements anioniques de la métalloporphyrine et les sites azotés chargés positivement du polymère.

2. Catalyseurs selon la revendication 1, caractérisés en ce que les groupements azotés sont choisis parmi la pyridine, l'histidine et l'imidazole.

3. Catalyseurs selon l'une des revendications 1 et 2, caractérisés en ce que les métalloporphyrines sont mésotétra-phényles substituées.

4. Catalyseurs selon les revendications 1 à 3, caractérisés en ce que les groupements anioniques sont des sulfonates.

5. Catalyseurs selon la revendication 3, caractérisés en ce que les noyaux phényles substitués en méso sont porteurs de groupements anioniques de type sulfonate.

6. Catalyseurs selon l'une des revendications 1 et 2, caractérisés en ce que les métalloporphyrines sont des complexes métalliques de porphyrines naturelles comportant au moins un groupe anionique de type acide carboxylique placé en position pyrrolique.

7. Catalyseurs selon les revendications 1 à 6, caractérisés en ce que les métalloporphyrines sont métallées avec le fer ou le manganèse.

8. Procédé de préparation des catalyseurs selon l'une des revendications 1 à 7, caractérisé en ce que dans une première étape, le polymère comportant les groupements servant de base de Lewis sous forme cationique est traité par une base permettant la déprotonation des sites azotés, dans une deuxième étape, ledit polymère déprotoné est ensuite mis en contact avec une solution de métalloporphyrine un temps suffiant pour établir les liaisons covalentes entre le métal de la porphyrine et les sites azotés du polymère puis dans une troisième étape, le complexe polymère-métalloporphyrine est traité par une solution d'acide qui, reprotonant les sites azotés du polymère, permet la fixation, par interaction électrostatique, des sites azotés chargés positivement sur les groupements anioniques de la métalloporphyrine.

## Claims

1. Catalysts for oxidation in the liquid phase of functional organic compounds consisting of metalloporphyrins comprising as substituents anionic groups which are active in the presence of an oxidising agent, characterised in that the metalloporphyrins are immobilised on a support which is insoluble in the liquid phase and of the polymer type comprising nitrogenous groups serving as a Lewis base, firstly, by the covalent bonding of the metal of the porphyrin and the nitrogen atom of the nitrogenous group of the support and, secondly, by electrostatic bonding of the anionic groups of the metalloporphyrin and the positively charged nitrogenous sites of the polymer.

2. Catalysts according to Claim 1, characterised in that the nitrogenous groups are selected from among pyridine, histidine and imidazole.

3. Catalysts according to either of Claims 1 and 2, characterised in that the metalloporphyrins are substituted mesotetra phenyls.

4. Catalysts according to any one of Claims 1 to 3, characterised in that the anionic groups are sulphonates.

5. Catalysts according to Claim 3, characterised in that the meso-substituted phenyl nuclei are sulphonate-type anionic group carriers.

6. Catalysts according to either of Claims 1 and 2, characterised in that the metalloporphyrins are metal complexes of natural porphyrins comprising at least one carboxylic acid-type anionic group placed in the pyrrolic position.

7. Catalysts according to any one of Claims 1 to 6, characterised in that the metalloporphyrins are metallised with iron or manganese.

8. Process for preparing the catalysts according to any one of Claims 1 to 7, characterised in that in a first step the polymer comprising the groups serving as the Lewis base in the cationic form is treated with a base enabling the nitrogenous sites to be deprotonated, in a second step the deprotonated polymer is subsequently brought into contact with a metalloporphyrin solution for an amount of time which is sufficient to establish the covalent bonds between the metal of the porphyrin and the nitrogenous sites of the polymer then in a third step the polymer- metalloporphyrin complex is treated with an acid solution which, reprotonating the nitrogenous sites of the polymer, enables the positively charged nitrogenous sites on the anionic groups of the metalloporphyrin to be fixed by electrostatic interaction.

## Patentansprüche

1. Katalysatoren für die Oxydation von funktionellen organischen Verbindungen, die aus Metallporphyrinen bestehen, welche als Substituenten anionische, in Anwesenheit eines Oxydationsmittels aktive Gruppen tragen, in der Flüssigphase, dadurch **gekennzeichnet,** daß die Metallporphyrine auf einem Träger, der in der Flüssigphase unlöslich und vom Typ eines Polymers ist, das als Lewis-Base dienende Stickstoff enthaltende Gruppen aufweist, einerseits durch kovalente Bindung zwischen dem Metall des Porphyrins und dem Stickstoffatom der Stickstoff enthaltenden Gruppe des Trägers und andererseits durch elektrostatische Bindung zwischen den anionischen Gruppen des Metallporphyrins und den positiv geladenen, Stickstoff enthaltenden Zentren des Polymers immobilisiert sind.

2. Katalysatoren nach Anspruch 1, dadurch **gekennzeichnet,** daß die Stickstoff enthaltenden Gruppen ausgewählt sind unter Pyridin, Histidin und Imidazol.

3. Katalysatoren nach einem der Ansprüche 1 und 2, dadurch **gekennzeichnet,** daß die Metallporphyrine substituierte meso-Tetraphenyle sind.

4. Katalysatoren nach den Ansprüchen 1 bis 3, dadurch **gekennzeichnet,** daß die anionischen Gruppen Sulfonate sind.

5. Katalysatoren nach Anspruch 3, dadurch **gekennzeichnet,** daß die in meso-Stellung substituierten Phenylkerne anionische Gruppen vom Sulfonattyp tragen.

6. Katalysatoren nach einem der Ansprüche 1 und 2, dadurch **gekennzeichnet,** daß die Metallporphyrine Metallkomplexe natürlicher Porphyrine sind, die wenigstens eine in Pyrrol-Stellung befindliche anionische Gruppe vom Typ einer Carbonsäure aufweisen.

7. Katalysatoren gemäß den Ansprüchen 1 bis 6, dadurch **gekennzeichnet,** daß die Metallporphyrine mit Eisen oder Magnesium metallisiert sind.

8. Verfahren zur Herstellung von Katalysatoren gemäß einem der Ansprüche 1 bis 7, dadurch **gekennzeichnet,** daß auf einer ersten Stufe das Polymer, welches die als Lewis-Base dienenden Gruppen enthält, in kationischer Form mit einer Base behandelt wird, welche die Deprotonierung der Stickstoff enthaltenden Zentren ermöglicht, auf einer zweiten Stufe das deprotonierte Polymer dann mit einer Metallporphyrinlösung während einer Zeitdauer in Berührung gebracht wird, die für die Bildung der kovalenten Bindungen zwischen dem Metall des Porphyrins und den Stickstoff enthaltenden Zentren des Polymers ausreicht, und auf einer dritten Stufe der Polymer-Metallporphyrin-Komplex mit einer Säurelösung behandelt wird, die durch Reprotonierung der Stickstoff enthaltenden Zentren des Polymers durch elektrostatische Wechselwirkung die Fixierung der positiv geladenen, Stickstoff enthaltenden Zentren auf den anionischen Gruppen des Metallporphyrins ermöglicht.
